(19)

Europäisches
Patentamt
European
Patent Office
Office européen
des brevets

(11) **EP 1 499 059 B1**

(12) **EUROPEAN PATENT SPECIFICATION**

(45) Date of publication and mention
of the grant of the patent:
**06.07.2011 Bulletin 2011/27**

(51) Int Cl.:
*H04L 1/20* (2006.01)    *H04L 1/00* (2006.01)

(21) Application number: **03291809.6**

(22) Date of filing: **18.07.2003**

(54) **Method and device for determining the link quality in an OFDM network**

Verfahren und Vorrichtung zum Ermitteln der Verbindungsgüte in einen OFDM-Netzwerk

Méthode et appareil pour déterminer la qualité de la liaison dans un résau OFDM

(84) Designated Contracting States:
**DE FR GB IT**

(43) Date of publication of application:
**19.01.2005 Bulletin 2005/03**

(73) Proprietor: **Motorola Mobility, Inc.**
**Libertyville, IL 60048 (US)**

(72) Inventors:
 • **De Champs, Paul F.**
  **01280 Prevessin-Moens (FR)**
 • **Simeons, Sébastien**
  **92330 Sceaux (Hauts-de-Seine) (FR)**

(74) Representative: **Cross, Rupert Edward Blount et al**
 **Boult Wade Tennant**
 **Verulam Gardens**
 **70 Gray's Inn Road**
 **London WC1X 8BT (GB)**

(56) References cited:
 **US-A1- 2002 110 138    US-A1- 2003 076 900**

 • **MUNETA S ET AL: "A new frequency-domain link adaptation scheme for broadband OFDM systems" IEEE VTS 50TH VEHICULAR TECHNOLOGY CONFERENCE (CAT. NO. 99CH36324), GATEWAY TO 21ST CENTURY COMMUNICATIONS VILLAGE, AMSTERDAM, 19 - 22 September 1999, pages 253-257 vol.1, XP002265324 Piscataway, NJ, USA, IEEE, USA ISBN: 0-7803-5435-4**
 • **LI ZHEN ET AL: "Link adaptation of wideband OFDM systems in multi-path fading channel" IEEE CCECE2002. CANADIAN CONFERENCE ON ELECTRICAL AND COMPUTER ENGINEERING. CONFERENCE PROCEEDINGS (CAT. NO. 02CH37373), WINNIPEG, MAN., CANADA , 12 - 15 May 2002, pages 1295-1299 vol.3, XP002265325 Piscataway, NJ, USA, IEEE, USA ISBN: 0-7803-7514-9**

**Description**

The present invention relates to a device and method for determining link quality for an OFDM communication link.

Orthogonal Frequency Division Multiplex OFDM is a special form of multicarrier modulation that is arranged to provide high data rate communication by modulating data onto a plurality of sub-carriers. Wireless Local Area Network WLAN standards 802.11a and Hiperlan/2 are two examples of systems that have adopted OFDM modulation where for each system a data symbol is modulated onto 48 data sub-carriers with the use of 4 pilot sub-carriers to facilitate phase tracking to allow for coherent demodulation.

OFDM systems are arranged to provide several modulation and coding alternatives, where each modulation and coding alternative allows different types of data mapping onto the respective data sub-carriers.

For example, seven physical layer modes are defined in the HiperLAN/2 specification ranging from a physical layer bit rate of 6 Mbps for Binary Phase Shift Key BPSK to 54 Mbps for 64 Quadrature Amplitude Modulation 64QAM.

During transmission and reception of an OFDM signal the signal will be attenuated and distorted by a frequency selective channel (i.e. the signals transmitted on the individual sub-carriers will be attenuated and distorted by different amounts dependent upon the environment where the channel characteristics are defined by a channel coefficient) in addition to noise and/or interference being added to the signal on each sub-carrier. The combination of noise and/or interference defines the quality of a communication channel (i.e. communication link) and is called the link quality.

The selection of a suitable modulation scheme is dependent upon the link quality of a communication link, such that if a selected data rate is not matched to the relevant link quality for a communication link data may either be lost, if the data rate selected is too fast for the given link quality, or a communication link may be under utilised.

However due to the variable environmental conditions of a wireless system the link quality of a communication link will fluctuate over a period of time. Consequently, OFDM systems are arranged to dynamically select an appropriate modulation and coding rate parameter using a link adaptation procedure to dynamically measure link quality and selecting an appropriate modulation scheme.

One technique that is used for measuring the link quality is based upon frame error rate estimates that are obtained from cyclic redundancy checks CRC on decoded received data. This technique requires the reception of many frames of data to obtain reliable information, which for a communication link with rapidly changing link quality is undesirable.

Another technique for measuring the link quality, as described in US 2002/0110138 A1, is based upon a signal to noise ratio measurement that is performed on training symbols within the preamble, which are transmitted as part of a data burst on the data sub-carriers, and using data symbols that having been demodulated and decoded are re-encoded and re-modulated. This technique can be complex, requiring additional processing power, and can introduce additional errors.

It is desirable to improve this situation.

In accordance with a first aspect of the present invention there is provided a device according to claim 1.

Preferably the means for determining the signal power calculates the signal power using a channel coefficient determined from a training symbol.

Preferably the means for determining the signal power calculates an average signal power for a communication link having 48 data sub-carriers and 4 pilot sub-carriers based on the following equation:

$$S^2 = \sum_{i=1}^{52} (H_{i})^2 / 52$$

where $H_i$ is the channel coefficient for the i sub-carrier.

Preferably the characteristic of the pilot signal that is compared with the channel coefficient is the phase of the pilot signal.

Preferably the distortion measurement for a communication link having 4 pilot sub-carriers is based on the following equation:

$$NI^2(k) = \sum_{i=1}^{4} (H_i - P_i e^{-j\Phi_{comp,i}(k)})^2 / 4$$

where $H_i$ is the channel coefficient for the i sub-carrier, $P_i$ is the phase and amplitude for the i pilot sub-carrier, k is for the k symbol and $e^{-j\phi_{comp,i}}(k)$ is a phase compensation value for the k symbol.

Preferably for a pilot signal that has been scrambled the noise and interference value for a communication link having 4 pilot sub-carriers is based on the following equation:

$$NI^2(k) = \sum_{i=1}^{4} (H_{i)} - P_i D_i(k) e^{-j\Phi_{comp,i}(k)})^2 / 4$$

where $H_i$ is the channel coefficient for the i pilot sub-carrier, $P_i$ is the phase and amplitude for the i sub-carrier, k is for the k symbol, $e^{-j\phi_{comp,i}}k)$ is a phase compensation value for the k symbol and $D_i(k)$ is a descrambling function.

In accordance with a second aspect of the present invention there is provided a method for determining link quality of an OFDM communication link according to claim 6.

This provides the advantage of allowing a link quality measurement to be made before the receipt of a whole frame and typically only requiring receipt of the preamble plus a few symbols before a good approximation of the link quality of a communication link can be performed. Further, this also provides the advantage of not requiring additional calculation to recode and remodulate a frame.

An embodiment of the invention will now be described, by way of example, with reference to the drawings, of which:

Figure 1 shows an OFDM receiver according to an embodiment of the present invention;

Figure 2 shows a OFDM media access frame;

Figure 3 shows a signal to noise/interference ratio measurement unit according to an embodiment of the present invention.

The following embodiment is based upon a HIPERLAN/2 OFDM WLAN system, where a communication channel is defined as having a bandwidth of 20MHz, having 52 non-zero sub-carriers spaced 312.5 kHz apart, where the 52 sub-carriers consist of 48 data sub-carriers and 4 pilot sub-carriers. However, any form of OFDM based system may be used that may have a different number of data and pilot sub-carriers.

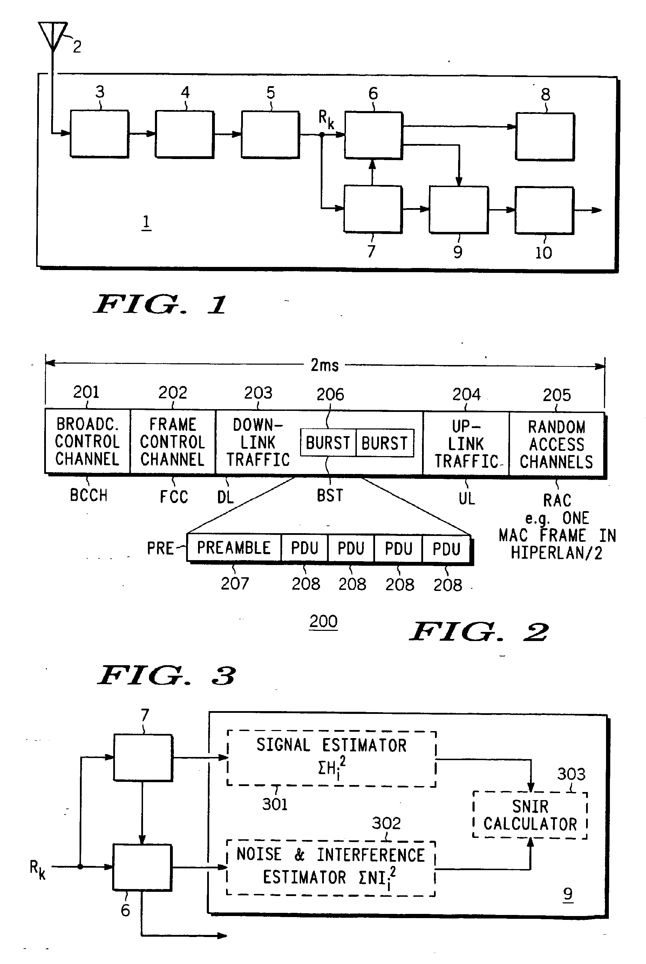

Figure 1 shows an OFDM receiver 1. The OFDM receiver 1 includes an antenna 2 coupled to an RF front end module 3, the RF front end module 3 is coupled to a synchronisation unit 4, the synchronisation unit 4 is coupled to a demodulation unit 5, the demodulation unit 5 is coupled to a phase offset compensation unit 6 and an equalisation unit 7 with the equalisation unit 7 also being coupled to the phase offset compensation unit 6, the phase offset compensation unit 6 is coupled a data decoder 8. The phase offset compensation unit 6 and equalisation unit 7 are also coupled to a signal to noise and interference ratio measurement unit 9, according to an embodiment of the present invention, as described below. The signal to noise and interference ration measurement unit 9 is coupled to a link adaptation module 10.

The OFDM receiver 1 receives an OFDM signal over a communication channel and demodulates the time domain symbols into frequency domain sub-carrier via the demodulation unit 5 and decodes data received over this channel via the data decoder 8, as is well known to a person skilled in the art.

The equalisation unit 7 compensates for the attenuation due to the frequency selective channel by first measuring the channel coefficients during channel coefficient estimation, which consist in storing the non-zero sub-carrier information receiving during the preamble long symbol, and then compensating the data sub-carriers either by dividing them by the channel coefficients or by multiplying them by the complex conjugate of the channel coefficients if just the phase needs to be compensated, as is well known to a person skilled in the art.

The phase offset compensation unit 6 compensates for the frequency offset that exists between the transmitter and the receiver carrier central frequency. OFDM transceivers are very sensitive to this frequency offset, a first frequency offset compensation is implemented in the time domain (in the synchronization unit 4). However a second phase compensation is implemented in the frequency domain in the phase error compensation unit 6 that is more refined and can be recalculated for each symbol. The phase error compensation unit 6 applies phase compensation to the data symbols by rotating each sub-carrier with the opposite of the phase error that occur on sub-carrier i for symbol k (i.e. $\phi_{error,i(k)}$: $\phi_{comp,i(k)} = -\phi_{error,i(k)}$)- The phase error is partly derived from the frequency offset which is measured by the synchronization unit 4 when the preamble is received. The phase error compensation is implemented by multiplying each data sub-carrier by a complex number:

Figure 2 illustrates a HIPERLAN/2 medium access control MAC transmission frame 200. The MAC frame 200 consists of a broadcast control channel BCCH 201 followed by a frame control channel FCC 202 followed by the respective downlink traffic 203 and uplink traffic 204 that is followed by a random access channel 205.

The data transmitted as part of the down link traffic 203 is contained within bursts 206 that consists of a preamble part 207 and protocol data units 208.

The preamble part 207 comprises a cyclic prefix and two training symbols (not shown), where the training symbols are used by the equalisation unit 7 to perform a channel coefficient estimation *H*, as is well known to a person skilled in the art.

Figure 3 shows the signal to noise/interference ratio measurement unit 9. The signal to noise and interference ratio measurement unit 9 includes a signal power estimator module 301, a pilot noise and interference power module 302 and a signal to noise/interference ratio calculator module 303.

The signal power estimator module 301 receives channel coefficient estimation information from the equalisation unit 7, the pilot noise and interference power module 302 receives phase information from the phase offset compensation unit 6 and the signal to noise/ interference ratio calculator module 303 is coupled to the output of both the signal power estimator module 301 and the pilot noise and interference power module 302 to allow calculation of a signal to noise/ interference ratio 303 for a received signal, as described below.

The signal to noise/interference ratio measurement unit 9 is arranged to calculate the SNIR, which is used to determine the link quality of a communication link, on a symbol by symbol basis (i.e. the SNIR is determined over the 52 sub-carriers).

For each received symbol the equalisation unit 7 calculates a channel coefficient estimation H over each sub-carrier using training symbol information contained with the preamble of an OFDM burst. For the purposes of this embodiment, the channel coefficient estimation can be, for more accuracy, derived from the average of the two training symbols contained within the preamble.

Using the channel coefficient estimation H provided by the equalisation unit 7 the signal power estimator module 301 calculates the average signal power for each of the sub-carriers using the following equation:

$$S^2 = \sum_{i=1}^{52} (H_i)^2 \Big/ 52$$

where i is used to denote the sub-carrier.

The average signal power value is provided to the signal to noise/interference ratio calculator module 303.

For each received data symbol k, which is received over the 48 data sub-carriers, the pilot noise and interference power module 302 calculates the average energy of the sub-carrier variations for the associated pilot information, transmitted over the four pilot sub-carriers, as described below.

First, the noise and interference $NI_i(k)$ of a pilot signal associated with a received data symbol k is calculated by the pilot noise and interference power module 302 by subtracting the pilot sub-carrier $P_i(k)$ received with the $k^{th}$ symbol, having been corrected for phase compensation, from the pilot sub-carrier channel coefficient estimate $H_i$, as given by the following equation:

$$NI_i(k) = \left| H_i - P_i(k)e^{-j\Phi_{comp,i}(k)} \right|$$

Having calculated the noise and interference $NI_i(k)$ of the pilot signals the pilot noise and interference power module 302 then calculates the average energy for the pilot signal noise and interference associated with the kth symbol using the following equation:

$$NI^2(k) = \frac{\sum_{i=pilotnumber}\left(H_i - P_i(k)e^{-j\Phi_{comp,i}(k)}\right)^2}{4}$$

as it can be assumed that the average energy for the pilot signal noise and interference will be the same as the average energy for the associated $k^{th}$ symbol noise and interference the value $NI^2(k)$ can be regarded as the same as the average energy for the associated kth symbol noise and interference.

The noise and interference energy value $NI^2(k)$ is provided to the signal to noise/interference ratio calculator module 303.

Using the received values of $S^2$ and $NI^2(k)$ the signal to noise/interference ratio calculator module 303 calculates a SNIR for the $k^{th}$ symbol, in decibels, using the following equation:

$$SNIR(k)=20\log(S/NI(k))=10\log(S^2)-10\log(NI^2(k))$$

$$SNIR(k) = 10\log\left(\sum_{i=1}^{52}(H_i)^2\right) - 10\log\left(\sum_{i=pilotnumber}\left(H_i - P_i(k)e^{-j\Phi_{comp,i}(k)}\right)^2\right) - 10\log(13)$$

Having calculated a SNIR for a given symbol the signal to noise and interference calculator module 303 can also average the calculated SNIR for all the symbols in a frame or over N frames:

$$SNIR(k) = \frac{\left(\sum_{i=1}^{N}SNIR(k)\right)}{N}$$

If the transmitted symbols have been scrambled by the transmitting node the above equations can be modified to include an appropriate descrambling function (i.e. $D_i(k)$). Accordingly, the above equations can be modified as follows:

$$NI_i(k) = \left|H_i - P_i(k)D_i(k)e^{-j\Phi_{comp,i}(k)}\right|$$

$$NI^2(k) = \frac{\sum_{i=pilotnumber}\left(H_i - P_i(k)D_i(k)e^{-j\Phi_{comp,i}(k)}\right)^2}{4}$$

$$SNIR(k) = 10\log\left(\sum_{i=1}^{52}(H_i)^2\right) - 10\log\left(\sum_{i=pilotnumber}\left(H_i - P_i(k)D_i(k)e^{-j\Phi_{comp,i}(k)}\right)^2\right) - 10\log(13)$$

The signal to noise/interference ratio calculator module 303 provides the SNIR information to the link adaptation module 10. The link adaptation module 10 uses the SNIR information to determine an appropriate modulation mode for modulating data to be communicated over the communication link.

In order to perform optimum link adaptation (i.e. determination and selection of an appropriate modulation mode) it is desirable to combine the SNIR measurement with information about the channel type (e.g. delay spread).

One example of a link adaptation algorithm that can be used by the link adaptation module 10, for determining a suitable modulation mode, is described below. The link adaptation algorithm is based upon the assumption that the channel type, characterised by its delay spread, is stable and does not vary when the receiver 1 stays within the same environment and, as such, it is possible to combine the SNIR with some PER measurement.

The algorithm comprises the following steps for a received frame:

(i) Using simulation to obtaining a table containing the data rate as a function of the SNR for the default channel type (the most probable one) and stored this table in MAC software memory;
(ii) For each received frame the PER is checked and if it is above PER_MAX (a typical value can be 0.01) then a correction factor SNIR_COR is incremented by 1 but if the PER is below a second treshold PER_MIN (typically 0.001) it is decremented by 1 and if the PER is between these 2 tresholds, SNIR_COR is not updated;
(iii) Obtaining the optimum data rate by reading the data rate table with SNIR-SNIR_COR.

At the next frame, the same process is executed, if the PER is above PER_MAX, the correction factor is increased (it can be incremented for each wrong frame to converge more quickly). After reaching a PER below PER_MAX we know that an optimum correction value corresponding to the channel delay spread has been selected.

It will be apparent to those skilled in the art that the disclosed subject matter may be modified in numerous ways and may assume, for example, OFDM systems having any number of data and pilot sub-carriers.

**Claims**

1. A device for determining link quality of an OFDM communication link having a pilot sub-carrier, the device comprising means for determining a signal power of an OFDM signal transmitted over the OFDM communication link; and means for calculating a noise and interference value for a pilot signal associated with a received data symbol by subtracting a pilot subcarrier $P_i(k)$ received with the received data symbol from a pilot sub-carrier channel coefficient estimate $H_1$ wherein the pilot subcarrier $P_i(k)$; and means for has been corrected for phase compensation determining a modulation mode based upon the ratio of the signal power of the received data symbol to the noise and interference value.

2. A device according to claim 1, wherein the means for determining the signal power calculates the signal power using a channel coefficient determined from a training symbol.

3. A device according to claim 2, wherein the means for determining the signal power calculates an average signal power for a communication link having 48 data sub-carriers and 4 pilot sub-carriers based on the following equation:

$$S^2 = \sum_{i=1}^{52} (H_{i})^2 / 52$$

where $H_i$ is the channel coefficient for the i sub-carrier.

4. A device according to any preceding claim, wherein the noise and interference value for a communication link having 4 pilot sub-carriers is based on the following equation:

$$NI^2(k) = \sum_{i=1}^{4} (H_i - P_i e^{-j\xi_{comp,i}(k)})^2 / 4$$

where Hi is the channel coefficient for the i sub-carrier, Pi is the phase and amplitude for the i pilot sub-carrier, k is for the k symbol and $e^{-j\phi_{comp,i}}(k)$ is a phase compensation value for the k symbol.

5. A device according to claim 4, wherein for a pilot signal that has been scrambled the noise and interference value for a communication link having 4 pilot sub-carriers is based on the following equation:

$$NI^2(k) = \sum_{i=1}^{4} (H_{i)} - P_i D_i(k) e^{-j\phi_{comp,i}(k)})^2 / 4$$

where Hi is the channel coefficient for the i pilot sub-carrier, Pi is the phase and amplitude for the i sub-carrier, k is for the k symbol, $e^{-j\phi_{comp,i}}(k)$ is a phase compensation value for the k symbol and $D_i(k)$ is a descrambling function.

6. A method for determining link quality of an OFDM communication link having a pilot sub-carrier, the method comprising determining a signal power of an OFDM signal transmitted over the OFDM communication link; calculating a noise and interference value for a pilot signal associated with a received data symbol by subtracting a pilot sub carrier $P_i(k)$ received with the received data symbol from a pilot sub-carrier channel coefficient estimate $H_i$, wherein the pilot subcarrier $P_i(k)$ has been corrected for phase compensation, and determining a modulation mode based upon the ratio of the signal power of the received data symbol to the noise and interference value.

**Patentansprüche**

1. Vorrichtung zur Bestimmung einer Verbindungsqualität einer OFDM-Kommunikationsverbindung, welche einen Pilot-Unterträger aufweist, wobei die Vorrichtung Folgendes aufweist: eine Einrichtung zur Bestimmung einer Signalstärke eines OFDM-Signals, welches über die OFDM-Kommunikationsverbindung übertragen wird; sowie eine Einrichtung zur Berechnung eines Rausch- und Interferenzwerts für das Pilotsignal, welches einem empfangenen Datensymbol zugehörig ist, indem ein mit dem empfangen Datensymbol empfangener Pilot-Unterträger $P_i(k)$ von einem Pilot-Unterträger-Kanalkoeffizientenschätzwert $H_i$ subtrahiert wird, wobei der Pilot-Unterträger $P_i(k)$ zur Phasenkompensation korrigiert worden ist; sowie eine Einrichtung zur Bestimmung eines Modulationsmodus basierend auf dem Verhältnis der Signalstärke des empfangenen Datensymbols zu dem Rausch- und Interferenzwert.

2. Vorrichtung nach Anspruch 1, **dadurch gekennzeichnet, dass** die Einrichtung zur Bestimmung der Signalstärke die Signalstärke unter Verwendung eines von einem Trainingssymbol bestimmten Kanalkoeffizienten berechnet.

3. Vorrichtung nach Anspruch 2, **dadurch gekennzeichnet, dass** die Einrichtung zur Bestimmung der Signalstärke eine durchschnittliche Signalstärke für eine Kommunikationsverbindung, welche 48 Daten-Unterträger und 4 Pilot-Unterträger aufweist, basierend auf der nachfolgenden Gleichung berechnet:

$$S^2 = \sum_{i=1}^{52} (H_{i)})^2 / 52$$

wobei $H_i$ der Kanalkoeffizient für den i-Unterträger ist.

4. Vorrichtung nach einem der vorhergehenden Ansprüche, **dadurch gekennzeichnet, dass** der Rausch- und Interferenzwert für eine Kommunikationsverbindung, welche 4 Pilot-Unterträger aufweist, auf der folgenden Gleichung basiert:

$$NI^2(k) = \frac{\sum_{i=1}^{4}\left(H_i - P_i(k)e^{-j\Phi_{comp,i}(k)}\right)^2}{4}$$

wobei $H_i$ der Kanalkoeffizient für den i-Unterträger ist, $P_i$ die Phase und Amplitude für den i-Pilot-Unterträger ist, k für das k-Symbol steht, und $e^{-j\phi}{}_{comp,i}(k)$ ein Phasenkompensationswert für das k-Symbol ist.

5. Vorrichtung nach Anspruch 4, **dadurch gekennzeichnet, dass** für ein Pilotsignal, welches verschlüsselt worden ist, der Rausch- und Interferenzwert für eine Kommunikationsverbindung, welche 4 Pilot-Unterträger aufweist, auf der folgenden Gleichung basiert:

$$NI^2(k) = \frac{\sum_{i=1}^{4}\left(H_i - P_i(k)D_i(k)e^{-j\Phi_{comp,i}(k)}\right)^2}{4}$$

wobei $H_i$ der Kanalkoeffizient für den i-Pilot-Unterträger ist, $P_i$ die Phase und Amplitude für den i-Unterträger ist, k für das k-Symbol steht, $e^{-j\phi}{}_{comp,i}(k)$ ein Phasenkompensationswert für das k-Symbol ist, und $D_i(k)$ eine Entschlüsselungsfunktion ist.

6. Verfahren zur Bestimmung einer Verbindungsqualität einer OFDM-Kommunikationsverbindung, welche einen Pilot-Unterträger aufweist, wobei das Verfahren die folgenden Schritte aufweist: Bestimmung einer Signalstärke eines OFDM-Signals, welches über die OFDM-Kommunikationsverbindung übertragen wird; Berechnung eines Rausch- und Interferenzwerts für ein Pilotsignal, welches einem empfangenen Datensymbol zugehörig ist, indem ein mit dem empfangenen Datensymbol empfangener Pilot-Unterträger $P_i(k)$ von einem Pilot-Unterträger-Kanalkoeffizientenschätzwert $H_i$ subtrahiert wird, wobei der Pilot-Unterträger $P_i$ (k) zur Phasenkompensation korrigiert worden ist; und Bestimmung eines Modulationsmodus basierend auf dem Verhälnis der Signalstärke des empfangenen Datensymbols zu dem Rausch- und Interferenzwert.

**Revendications**

1. Dispositif pour déterminer la qualité de liaison d'une liaison de communication OFDM ayant une sous-porteuse pilote, le dispositif comprenant un moyen pour déterminer une puissance d'un signal OFDM transmis par la liaison de communication OFDM; et un moyen pour calculer une valeur de bruit et d'interférence pour un signal pilote associé à un symbole de données reçu en déduisant une sous-porteuse pilote $P_i(k)$ reçue avec le symbole de données reçu d'une estimation de coefficient de canal de sous-porteuse pilote $H_i$, où la sous-porteuse pilote $P_i(k)$ a été corrigée pour une compensation de phase, et un moyen pour déterminer un mode de modulation basé sur le rapport de la puissance de signal du symbole de données reçu à la valeur de bruit et d'interférence.

2. Dispositif selon la revendication 1, dans lequel le moyen pour déterminer la puissance du signal calcule la puissance du signal en utilisant un coefficient de canal déterminé par un symbole d'apprentissage.

3. Dispositif selon la revendication 2, dans lequel le moyen pour déterminer la puissance du signal calcule une puissance de signal moyenne pour une liaison de communication ayant 48 sous-porteuses de données et 4 sous-porteuses pilotes basées sur l'équation suivante:

$$S^2 = \sum_{i=1}^{52}(H_{i})^2 / 52$$

où $H_i$ est le coefficient de canal pour la sous-porteuse i.

4. Dispositif selon l'une quelconque des revendications précédentes, dans lequel la valeur de bruit et d'interférence pour une liaison de communication ayant 4 sous-porteuses pilotes est basée sur l'équation suivante:

$$NI^2(k) = \sum_{i=1}^{4} (H_i - P_i e^{-j\phi_{comp,i}(k)})^2 / 4$$

où Hi est le coefficient de canal pour la sous-porteuse i, Pi est la phase et l'amplitude pour la sous-porteuse pilote i, k est pour le symbole k et $e^{-j\phi_{comp,i}}(k)$ est une valeur de compensation de phase pour le symbole k.

5. Dispositif selon la revendication 4, dans lequel pour un signal pilote qui a été brouillé, la valeur de bruit et d'interférence pour une liaison de communication ayant 4 sous-porteuses pilotes est basée sur l'équation suivante:

$$NI^2(k) = \sum_{i=1}^{4} (H_{i} - P_i D_i(k) e^{-j\phi_{comp,i}(k)})^2 / 4$$

où Hi est le coefficient de canal pour la sous-porteuse pilote i, Pi est la phase et l'amplitude pour la sous-porteuse i, k est pour le symbole k, $e^{-j\phi_{comp,\,i}}(k)$ est une valeur de compensation de phase pour le symbole k et $D_i(k)$ est une fonction de désembrouillage.

6. Procédé pour déterminer une qualité de liaison d'une liaison de communication OFDM ayant une sous-porteuse pilote, le procédé comprenant la détermination d'une puissance d'un signal OFDM transmis par la liaison de communication OFDM; le calcul d'une valeur de bruit et d'interférence pour un signal pilote associé à un symbole de données reçu en déduisant une sous-porteuse pilote $P_i(k)$ reçue avec le symbole de données reçues d'une estimation de coefficient de canal de sous-porteuse pilote $H_i$, où la sous-porteuse pilote $P_i(k)$ a été corrigée pour une compensation de phase, et la détermination d'un mode de modulation basé sur le rapport de la puissance du signal du symbole de données reçu à la valeur de bruit et d'interférence.

**FIG. 1**

200

**FIG. 2**

**FIG. 3**

**EP 1 499 059 B1**

**REFERENCES CITED IN THE DESCRIPTION**

**Patent documents cited in the description**

- US 20020110138 A1